# EUROPEAN PATENT APPLICATION

(11) **EP 2 381 711 A1**
(43) Date of publication of application: **26.10.2011**
(21) Application number: 09834026.8
(22) Date of filing: 12.08.2009
(51) Int. Cl.: H04W 12/02

(54) **METHOD FOR UPDATING MOBILE TERMINAL SOFTWARE AND MOBILE TERMINAL**

(30) Priority: 22.12.2008 CN 200810188652
(71) Applicant: ZTE Corporation, Shenzhen, Guangdong 518057 (CN)
(72) Inventor: YANG, Cuihong, Guangdong 518057 (CN); SUN, Dengyun, Guangdong 518057 (CN)
(74) Representative: Dr. Weitzel & Partner
(86) International application number: PCT/CN2009/073219
(87) International publication number: WO 2010/072073

(57) **Abstract**

Disclosed are a method for updating mobile terminal software and a mobile terminal. The method comprises the following steps: the mobile terminal software and/or the tool software used for updating the mobile terminal software perform hand-shaking according to encrypted hand-shaking data sent by the other party; wherein in the case that said hand-shaking is successful, the mobile terminal software or the tool software carries out verification of new mobile terminal software according to the pre-encrypted feature identifier of the mobile terminal software and the feature identifier of the new mobile terminal software, and determines whether the update is allowable according to the verification result. By introducing the two authentications of both the handshaking data and of the feature identifier, this invention greatly eliminates the possibility that the terminal may be modified by a software, avoids terminal unlocking and modification of language in the relevant technology, overcomes the deficiencies of the prior art in preventing such unlocking and language modification, ensures to the largest extend the terminal security, and effectively protects the interests of providers.

## Description

### Field of the Invention

The present invention relates to the communication field, and more particularly, to a method for updating mobile terminal software and a mobile terminal.

### Background of the Invention

At present, along with the rapid development of global mobile communication market, the competitions among various operators are also intense. Especially in the terminal product market, operators release various series of promotion policies one after another to attract users, and sell terminals to users with great preferential benefit; and some operators even give terminals to users for free.

However, considering of theirs own benefits, operators generally adopt a series of restrictive measures. The common restrictive manner is to restrict a terminal, so that the terminal can only be used in the network of the operator giving the user with preferential benefit, or it is required to insert a specified card to enable the terminal into the usable state. Such restrictive manner is usually called as network-locking or card-locking.

Though operators can restrict the usage of their terminals, it is still possible that the terminals of network-locking or card-locking may be modified by some lawbreakers via some methods, so that the modified terminals lose the function of network-locking or card-locking, which releases the restriction of operators and makes the terminals capable of being used by other operators or other networks; or makes the terminals used by inserting cards apart from the specified card, and it is even possible to change the interface of the terminal to other languages and further causes the changed terminal to be used in the network of the operators with other languages, which obviously damages the benefits of operators seriously.

Therefore, an important issue is how to prevent network-locking and card-locking terminal from being changed to an unlocked terminal by software (i.e. avoiding the unlocking), and to prevent language A of terminals from being changed to language B by software (i.e. avoid modification of language), so as to protect the benefits of operators.

At present, there are a few methods provided in the mobile terminal field, for preventing the software of the mobile terminal device from being modified illegally , wherein one method is to record the value stored in PAF-ROM and necessary data such as international mobile equipment identity (IMEI) simultaneously in a memory area that can only be programmed once, and with such values as the basic data, a comparison is made to determine whether it is abnormal changed software, when being changed by the software, so as to determine whether the software is illegally changed. The problem of the above method is that a portion of the terminal must be divided as a memory that can only be programmed once, or a programmable read only memory (PROM) chip must be added independently, so that the cost of implementation is high; moreover, the determination of the above method is focused on the changed result, and it is necessary to prevent the changed terminal from being used continuously after determining that the software of terminal is illegally changed, which has lag and is unable to prevent the terminal from being changed by software in fact.

There is no effective solution provided in the related art to solve the problem that it is impossible for preventing the terminal from being changed by software.

### Summary of the Invention

The present invention is provided to solve the problem that it is impossible for preventing the terminal from being changed by software in the related art; and the major objective of the present invention is to provide a method for updating mobile terminal software and mobile terminal to solve the above problem.

To achieve the above objectives, according to one aspect of the present invention, a method for updating mobile terminal software is provided.

The method for updating mobile terminal software comprises the following steps:mobile terminal software and/or tool software used for updating the mobile terminal software performing hand-shaking according to encrypted hand-shaking data sent by the other party; if the hand-shaking is successful, the mobile terminal software or the tool software carrying out verification of new mobile terminal software according to a pre-encrypted feature identifier of the mobile terminal software and a feature identifier of the new mobile terminal software, and determining whether the update is allowable according to the verification result.

The above hand-shaking comprises the following steps: one party of the mobile terminal software and/or the tool software decrypting the encrypted hand-shaking data from the other party, and determining whether the decrypted hand-shaking data is identical to preset hand-shaking data; if the determining result is yes, the mobile terminal software determining that the hand-shaking is successful, otherwise, the mobile terminal software determining that the hand-shaking is failed.

On the one hand, in the case of determining whether the hand-shaking is successful by the mobile terminal software, the processing for performing the hand-shaking comprises: the mobile terminal software performing the calculation on preset parameter(s) by using a preset algorithm to obtain the preset hand-shaking data, and receiving the encrypted hand-shaking data from the tool software; and the mobile terminal software decrypting the encrypted hand-shaking data from the tool software, and comparing the decrypted hand-shaking data with the preset hand-shaking data.

On the other hand, in the case of determining whether the hand-shaking is successful by the mobile terminal software, the processing for performing the hand-shaking comprises: the mobile terminal software performing the calculation on preset parameter(s) by using a preset algorithm to obtain the preset hand-shaking data, and receiving the specific parameters served as the hand-shaking data encrypted and sent by the tool software; and the mobile terminal software decrypting the encrypted hand-shaking data from the tool software to obtain the specific parameters, performing the calculation on the specific parameters according to the preset algorithm, and comparing the calculated result of the specific parameters with the preset hand-shaking data.

In addition, the processing for verifying the new mobile terminal software by the mobile terminal software or the tool software comprises: the mobile terminal software or the tool software decrypting the pre-encrypted feature identifier of the mobile terminal software; the mobile terminal software or the tool software comparing the decrypted feature identifier of the mobile terminal software with the feature identifier of the new mobile terminal software; if the feature identifier of the mobile terminal software is identical to the feature identifier of the new mobile terminal software, determining that the new mobile terminal software passes the verification; and if the feature identifier of the mobile terminal software is different from the feature identifier of the new mobile terminal software, determining that the new mobile terminal software does not pass the verification.

The processing for determining whether the update is allowable according to the verification result comprises:. if the new mobile terminal software passes the verification, the tool software updating the mobile terminal software by using the new mobile terminal software; and if the new mobile terminal software does not pass the verification, stopping the update processing.

Preferably, the feature identifier of the mobile terminal software and the feature identifier of the new mobile terminal software comprise at least one of the following: an operator identifier, a network-locking card-locking identifier, and a language identifier.

To achieve the above objectives, according to another aspect of the present invention, a mobile terminal device is provided.

The mobile terminal comprises: a hand-shaking data module, configured to generate hand-shaking data, determine whether the hand-shaking between mobile terminal software and tool software is successful according to hand-shaking data from the tool software and the generated hand-shaking data, and return the determination result to the tool software; a feature identifier module, configured to store the encrypted preset feature identifier which is used for the mobile terminal software or the tool software to carry out the verification of the new mobile terminal software for updating the mobile terminal software; an encryption module, configured to encrypt the hand-shaking data generated by the hand-shaking data module and the unencrypted feature identifier; and a communication command module, configured to send the hand-shaking data encrypted by the encryption module to the tool software, and receive the encrypted hand-shaking data from the tool software.

The hand-shaking data module is configured to compare the hand-shaking data from the tool software with the generated hand-shaking data, determine the hand-shaking is successful if the hand-shaking data from the tool software is identical to the generated hand-shaking data, and determine the hand-shaking is failed if the hand-shaking data from the tool software is different from the generated hand-shaking data.

Preferably, the feature identifier of the mobile terminal software and the feature identifier of the new mobile terminal software comprise at least one of the following: an operator identifier, a network-locking card-locking identifier, and a language identifier.

By means of the above technical solution of the present invention, by introducing the two authentications of both the handshaking data and the feature identifier, this invention greatly eliminates the possibility that the terminal may be modified by a software, avoids terminal unlocking and modification of language in the relevant technology, overcomes the deficiencies of the technology of preventing such unlocking and language modification in the prior art, ensures maximum terminal security, and effectively protects the interests of providers.

### Brief Description of the Drawings

The accompanying drawings described herein are used for further illustrating the present invention and constitute a part of the application. The illustrative embodiments of the present invention and the description thereof are used for further explaining the present invention and are not used for limiting unduly the protection scope thereof, in which:
Fig. 1 is a flowchart illustrating the method for updating mobile terminal software according to method embodiment of the present invention;
Fig. 2 is a flowchart illustrating a processing example of the method for updating mobile terminal software according to method embodiment of the present invention;and
Fig. 3 is a block diagram illustrating the mobile terminal according to device embodiment of the present invention.

### Detailed Description of the Preferred Embodiments

### Function Summary

To solve the problem that the terminal can easily be changed by software in the related art, the present invention implements the unidirectional/bidirectional hand-shaking of the tool software (software for performing the update) and the mobile terminal software (he software to be updated) and the verification of the new software of the mobile terminal (the software that will replace the mobile terminal software) performed by the mobile terminal software by taking into account the feature that the changing of software needs pass through a data line, a built-in data interface of mobile terminal and the data line connected to the interface, so as to eliminate the possibility of illegally updating the mobile terminal software during the illegal changing process rather than based on the illegally-changed result, thereby protecting to the largest extend the mobile terminal in the nondestructive manner.

### Method Embodiment

In accordance with the embodiment of the present invention, a method for updating mobile terminal software is provided for preventing the mobile terminal software of the mobile terminal from being illegally updated.

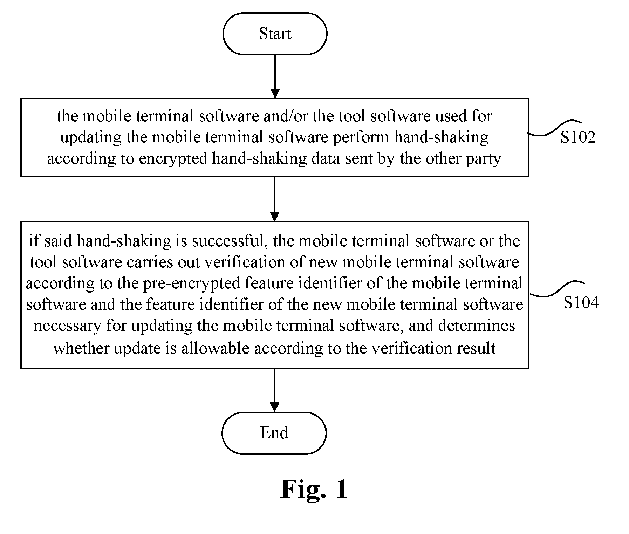

Fig. 1 is a flowchart illustrating the method for updating mobile terminal software according to method embodiment of the present invention. As shown in fig. 1, the method comprises the following steps S102-S104.

Step S102, mobile terminal software and/or tool software used for updating the mobile terminal software perform hand-shaking according to encrypted hand-shaking data sent by the other part, that is to say, one party of the mobile terminal software and the tool software used for updating the mobile terminal software performs an unidirectional hand-shaking of both parties according to the encrypted hand-shaking data sent by the other party, or the mobile terminal software and the tool software used for updating the mobile terminal software perform the bidirectional hand-shaking of both parties according to the encrypted hand-shaking data that both parties send to each other

Step S104, if said hand-shaking is successful, the mobile terminal software or the tool software carries out verification of new mobile terminal software according to a pre-encrypted feature identifier of the mobile terminal software (the feature identifier may be a identification group, of which the composition may be combined and adjusted freely according to the practical requirement, for example, it may include one or the combination of an operator identifier, a network-locking card-locking identifier and a language identifier, and further include information such as a version number) and a feature identifier of the new mobile terminal software required for updating the mobile terminal software, and determines whether the update is allowable according to the verification result, i.e. determines whether it is allowable that the new mobile terminal software is used to update the mobile terminal software.

In step S102, The processing for performing the unidirectional or bidirectional hand-shaking specifically comprises the following steps: no matter it is unidirectional hand-shaking or bidirectional hand-shaking, one party of the mobile terminal software and the tool software needs to decrypt the encrypted hand-shaking data from the other party, and determines whether the decrypted hand-shaking data are identical to the preset hand-shaking data, wherein if said determining result is yes, the hand-shaking is determined to be successful; otherwise, the hand-shaking is determined to be failed.

Moreover, in step S102, the hand-shaking data may be generated randomly by the mobile terminal software according to some information; the mobile terminal software and the legal tool software both know the content of hand-shaking data. By introducing the hand-shaking data, it is guaranteed that the illegal tool software can not implement successfully the hand-shaking communication; at the same time, by encrypting the hand-shaking data, it is guaranteed that the correct hand-shaking data can not be monitored from the transmission packet. The method for encrypting the hand-shaking data may adopt a same set of encryption algorithm negotiated and shared by the mobile terminal software and the tool software.

Additionally, if the unidirectional hand-shaking is performed, the encrypted hand-shaking data may be transmitted as a command by the tool software served as the master control side to the mobile terminal software. After receiving and decrypting the hand-shaking data, the mobile terminal software served as the receiving side compares the hand-shaking data with its hand-shaking data firmly stored (in read only memory). The encrypted hand-shaking data may also be transmitted to the tool software by the mobile terminal software served as the master control side via a command response packet. After receiving and decrypting the hand-shaking data, the tool software served as the receiving side compares the hand-shaking data with its hand-shaking data firmly stored (in read only memory). Preferably, no matter the hand-shaking data is in the mobile terminal software or in the tool software, the hand-shaking data is set as read only attribute, so that the hand-shaking data can not be changed through any external manner.

In the above processing, the hand-shaking data may be calculated according to the preset parameters (for example, the terminal serial number that canbe acquired by the mobile terminal software and the tool software); and the parameters can also be directly served as the hand-shaking data for encrypted transmission. In general, such preset parameters may be stored in the tool software and/or the mobile terminal software. The initiating side of hand-shaking may be any one of the terminal software and the tool software.

However, preferably, the final result determination may be performed at the mobile terminal software side to prevent some pirated tools from skipping the step for determining whether the hand-shaking is successful, which further guarantees the security of update.

The manner for performing the hand-shaking success determination at the terminal side may be one of the following manners.

(Manner 1) the mobile terminal software performs calculation on preset parameters by using preset algorithm(s) to obtain preset hand-shaking data, and receives the encrypted hand-shaking data from the tool software; and the mobile terminal software decrypts the encrypted hand-shaking data from the tool software, and compares the decrypted hand-shaking data with preset hand-shaking data.

(Manner 2) the mobile terminal software performs calculation on preset parameters by using preset algorithm(s) to obtain preset hand-shaking data, and receives the specific parameters served as the hand-shaking data encrypted and sent by the tool software; the mobile terminal software decrypts the encrypted hand-shaking data from the tool software to obtain the specific parameters, performs calculation on the specific parameters according to the preset algorithm(s), and compares the calculation result of the specific parameters with the preset hand-shaking data.

It should be noted that, in the above Manner 2, the specific parameters are severed as the hand-shaking data, and the processing for the calculation of the specific parameters is performed at the terminal side.

In addition, in step 104, the processing of verifying new mobile terminal software performed by the mobile terminal software or tool software comprises following steps: the mobile terminal software or the tool software decrypts the pre-encrypted feature identifier of the mobile terminal software; and the mobile terminal software or the tool software compares the decrypted feature identifier of the mobile terminal software with the feature identifier of the new mobile terminal software wherein if the feature identifier of the mobile terminal software is identical to the feature identifier of the new mobile terminal software, it is determined that the new mobile terminal software passes the verification and the update is allowed; and if the feature identifier of the mobile terminal software is different from the feature identifier of the new mobile terminal software, it is determined that the new mobile terminal software does not pass the verification and the update processing is stopped.

In the case of verifying the new mobile terminal software by the tool software, the tool software needs to send a command for acquiring the feature identifier of mobile terminal software to the mobile terminal software; moreover, in the process of the mobile terminal software sending its feature identifier to the tool software, the feature identifier may be encrypted and then be transmitted, which enhances the security of the update process.

On the other hand, in the case of verifying the new mobile terminal software by the mobile terminal software, it is necessary for receiving the feature identifier of the new mobile terminal software from the tool software; and the feature identifier of the new mobile terminal software may be encrypted and then be transmitted, which enhances the security of the update process.

The verification of the new mobile terminal software performed by the tool software is described as example.

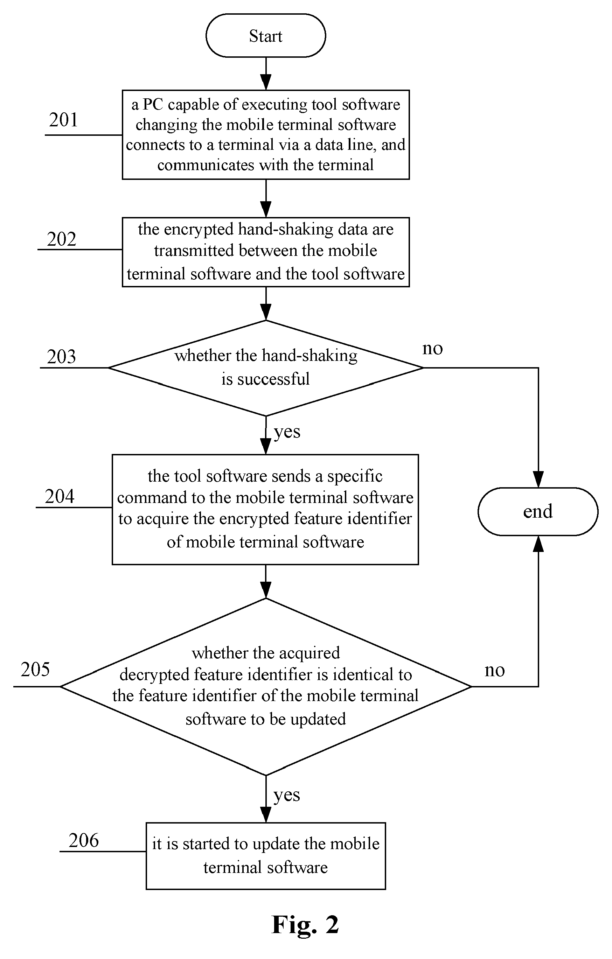

Fig. 2 is a flowchart illustrating an example of the method for updating mobile terminal software according to the method embodiment of the present invention As shown in fig. 2, in practical application, in the case of verifying the new mobile terminal software by the tool software, the method for updating mobile terminal software according to the present embodiment may comprise the following steps 201-206.

Step 201, a personal computer (PC) capable of executing tool software is connected to a terminal via a data line, and starts to communicate with the terminal.

Step 202, the software of the terminal itself and the tool software transmit encrypted hand-shaking data

Step 203, it is determined whether the hand-shaking is successful, wherein in the case of the unidirectional hand-shaking, if the tool software served as the master control side sends the encrypted hand-shaking data in step 202, the mobile terminal software determines whether the hand-shaking data are correct, encrypts the determination result and returns it to the tool software via a command response packet, and if the mobile terminal software served as the master control side sends the encrypted hand-shaking data in step 202, the tool software determines whether the hand-shaking data are correct, and returns the encrypted determination result; and in the case of the bidirectional hand-shaking, each of the two sides needs to determine whether the hand-shaking data of the other side is correct, and returns the encrypted determination result to the other side ( steps 202 and 203 correspond to the above step S 1 02).

Step 204, it can be determined whether the hand-shaking is successful according to the determination result of step 203, wherein if the hand-shaking is failed, the tool software terminates the procedure; and if the hand-shaking is successful, the tool software sends a specific command to the mobile terminal software to acquire the encrypted feature identifier of mobile terminal software, wherein the specific command is negotiated between the tool software and the mobile terminal software in a special manner the algorithm for encrypting the feature identifier may be negotiated by the mobile terminal software and the tool software together, and the algorithm for encrypting the feature identifier may be the same as the algorithm for encrypting the hand-shaking data; and the encryption transmission of the feature identifier guarantees that the real data can not be monitored during transmission, which enhances the protection of terminal security

Step 205, it is determined whether the acquired decrypted feature identifier isidentical to the feature identifier of the mobile terminal software to be updated (i.e. the above new mobile terminal software) (steps 204 and 205 correspond to the above step S104).

Step 206, if the comparing result of step 205 is "being identical", it is started to update the mobile terminal software (which can have the update procedure in which the tool software replaces the mobile terminal software with the new mobile terminal software), otherwise, the procedure is terminated.

### Device Embodiment

In the present embodiment, a mobile terminal is provided for implementing the above method for updating mobile terminal software and the mobile terminal can avoid the illegal update of its terminal software.

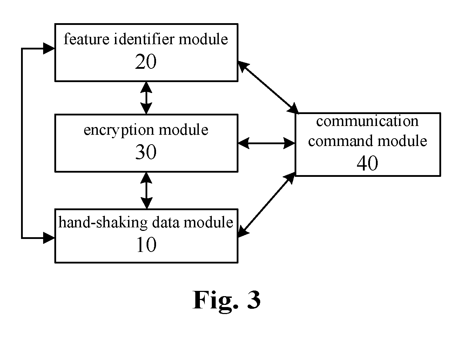

Fig. 3 is a block diagram illustrating the mobile terminal according to the device embodiment of the present invention. As shown in fig. 3, the mobile terminal according to the present embodiment comprises: a hand-shaking data module 10, a feature identifier module 20, an encryption module 30, a communication command module 40, of which the above structure is described hereinafter.

The hand-shaking data module 10 is used for generating the hand-shaking data, reading the hand-shaking data from the tool software, determining whether the hand-shaking of the mobile terminal software and the tool software is successful according to the handshaking data from the tool software and the generated hand-shaking data, and returning the determination result to the tool software.

The feature identifier module 20 is used for storing the encrypted preset feature identifier, so that the mobile terminal software or the tool software carries out the verification of the new mobile terminal software for replacing the mobile terminal software, by using the stored feature identifier;

The encryption module (may also be referred to as encryption algorithm module) 30 is used for encrypting the hand-shaking data generated by the hand-shaking data module 10 and the unencrypted feature identifier, so as to avoid that the transmitted hand-shaking data and the feature identifier of the mobile terminal software are monitored in the process of communication.

The communication command module 40 is used for sending the hand-shaking data encrypted by the encryption module 30 to the tool software, receiving the encrypted hand-shaking data from the tool software, and encoding, packing and transmitting the feature identifier of the mobile terminal software. Preferably, during the implementation of the present invention, the command transmitted by the communication command module can be separated from other general commands, so as to further guarantee the security of terminal.

The hand-shaking data module 10 may compare the hand-shaking data from the tool software with the generated hand-shaking data, determine the hand-shaking is successful if the hand-shaking data from the tool software are the same as the generated hand-shaking data, otherwise, determine the hand-shaking is failed. Herein, the generated hand-shaking data may be the hand-shaking data which calculated according preset parameters (for example the serial number of terminal), or may be the extracted preset parameters; moreover, during the hand-shaking, the processing described in the above Manner 1 and Manner 2 can be referred to for the detailed processing.

The method of the encryption module 30 for encrypting the hand-shaking data generated by the hand-shaking data module 10 may be the same as or different from the method for encrypting the unencrypted feature identifier

Preferably, the feature identifier is at least one of the following: an operator identifier, a network-locking card-locking identifier, a language identifier. The feature identifier herein may be an identification group, of which the composition may be adjusted and changed according to the practical requirements, which is not listed herein one by one any more.

It can be seen from the above that, in the technical solution of the present invention, the software of the terminal itself and the tool software both have a set of negotiated encryption algorithm. When the mobile terminal software is changed through the data line, it is only possible to replace the mobile terminal software with the network-locking card-locking software of the local operator and the mobile terminal software of the local operator language, which effectively avoids the illegal software update of terminal and guarantees the security of terminal.

To sum up, by introducing the two authentications of both the handshaking data and the feature identifier, this invention greatly eliminates the possibility that the terminal may be modified by software, avoids terminal unlocking and modification of language in the relevant technology, overcomes the deficiencies of the prior art in preventing such unlocking and language modification, ensures to the largest extent the terminal security, and effectively protects the interests of operators; in addition, the security may be ensured only by adding a little processing, which is implemented simply and reliably

The foregoing is only preferred embodiments of the present invention and is not for use in limiting the protection scope thereof, and for those skilled in the art, there may be various modifications and changes to the present invention. Any modification, equivalent replacement and improvement made under the spirit and principle of the present invention should be included in the protection scope thereof.

## Claims

1. A method for updating mobile terminal software, **characterized by** comprising:
mobile terminal software and/or tool software used for updating the mobile terminal software performing hand-shaking according to encrypted hand-shaking data sent by the other party; and
if the hand-shaking is successful, the mobile terminal software or the tool software carrying out verification of new mobile terminal software according toa pre-encrypted feature identifier of the mobile terminal software and a feature identifier of the new mobile terminal software, and determining whether the update is allowable according to the verification result.

2. The method for updating mobile terminal software according to claim 1, **characterized in that** the hand-shaking comprises:
one party of the mobile terminal software and/or the tool software decrypting the encrypted hand-shaking data from the other party, and determining whether the decrypted hand-shaking data is identical to preset hand-shaking data; and
if the determining result is yes, the mobile terminal software determining that the hand-shaking is successful, otherwise, the mobile terminal software determining that the hand-shaking is failed.

3. The method for updating mobile terminal software according to claim 2, **characterized in that** in the case of determining whether the hand-shaking is successful by the mobile terminal software, the processing for performing the hand-shaking comprises:
the mobile terminal software performing the calculation on preset parameter(s) by using a preset algorithm to obtain the preset hand-shaking data, and receiving the encrypted hand-shaking data from the tool software; and
the mobile terminal software decrypting the encrypted hand-shaking data from the tool software, and comparing the decrypted hand-shaking data with the preset hand-shaking data.

4. The method for updating mobile terminal software according to claim 2, **characterized in that** in the case of determining whether the hand-shaking is successful by the mobile terminal software, the processing for performing the hand-shaking comprises:
the mobile terminal software performing the calculation on preset parameter(s) by using a preset algorithm to obtain the preset hand-shaking data, and receiving the specific parameters served as the hand-shaking data encrypted and sent by the tool software; and
the mobile terminal software decrypting the encrypted hand-shaking data from the tool software to obtain the specific parameters, performing the calculation on the specific parameters according to the preset algorithm, and comparing the calculated result of the specific parameters with the preset hand-shaking data.

5. The method for updating mobile terminal software according to claim 1, **characterized in that** the processing for verifying the new mobile terminal software by the mobile terminal software or the tool software comprises:
the mobile terminal software or the tool software decrypting the pre-encrypted feature identifier of the mobile terminal software;
the mobile terminal software or the tool software comparing the decrypted feature identifier of the mobile terminal software with the feature identifier of the new mobile terminal software;
if the feature identifier of the mobile terminal software is identical to the feature identifier of the new mobile terminal software, determining that the new mobile terminal software passes the verification; and
if the feature identifier of the mobile terminal software is different from the feature identifier of the new mobile terminal software, determining that the new mobile terminal software does not pass the verification.

6. The method for updating mobile terminal software according to claim 5, **characterized in that** the processing for determining whether the update is allowable according to the verification result comprises:
if the new mobile terminal software passes the verification, the tool software updating the mobile terminal software by using the new mobile terminal software; and
if the new mobile terminal software does not pass the verification, stopping the update processing.

7. The method for updating mobile terminal software according to any of claims 1-6, **characterized in that** the feature identifier of the mobile terminal software and the feature identifier of the new mobile terminal software comprise at least one of the following:an operator identifier, a network-locking card-locking identifier, and a language identifier.

8. A mobile terminal, **characterized by** comprising:
a hand-shaking data module, configured to generate hand-shaking data, determine whether the hand-shaking between mobile terminal software and tool software is successful according to hand-shaking data from the tool software and the generated hand-shaking data, and return the determination result to the tool software;
a feature identifier module, configured to store the encrypted preset feature identifier which is used for the mobile terminal software or the tool software to carry out the verification of the new mobile terminal software for updating the mobile terminal software;
an encryption module, configured to encrypt the hand-shaking data generated by the hand-shaking data module and the unencrypted feature identifier; and
a communication command module, configured to send the hand-shaking data encrypted by the encryption module to the tool software, and receive the encrypted hand-shaking data from the tool software.

9. The mobile terminal according to claim 8, **characterized in that** the hand-shaking data module is configured to compare the hand-shaking data from the tool software with the generated hand-shaking data, determine the hand-shaking is successful if the hand-shaking data from the tool software is identical to the generated hand-shaking data, and determine the hand-shaking is failed if the hand-shaking data from the tool software is different from the generated hand-shaking data.

10. The mobile terminal according to claim 8 or 9, **characterized in that** the feature identifier of the mobile terminal software and the feature identifier of the new mobile terminal software comprise at least one of the following: an operator identifier, a network-locking card-locking identifier, and a language identifier.
